# EUROPÄISCHE PATENTSCHRIFT

(11) **EP 2 512 690 B1**
(45) Veröffentlichungstag und Bekanntmachung des Hinweises auf die Patenterteilung: **16.07.2014**
(21) Anmeldenummer: 10781447.7
(22) Anmeldetag: 24.11.2010
(51) Int. Cl.: B05B 15/12, B03C 3/017, B03C 3/16

(54) **VERFAHREN UND VORRICHTUNG ZUM ELEKTROSTATISCHEN ABSCHEIDEN VON OVERSPRAY**
PROCESS AND APPARATUS FOR ELECTROSTATICAL PRECIPITATION OF OVERSPRAY
PROCÉDÉ ET DISPOSITIF DE PRÉCIPITATION ÉLECTROSTATIQUE DE PEINTURE EXCÉDENTAIRE

(30) Priorität: 15.12.2009 DE 102009058208
(43) Veröffentlichungstag der Anmeldung: 24.10.2012
(73) Patentinhaber: Eisenmann AG, 71032 Böblingen (DE)
(72) Erfinder: SCHULZE, Herbert, 71134 Aidlingen (DE); LINK, Kersten, 71120 Grafenau (DE); SWOBODA, Werner, 71032 Böblingen (DE); HIHN, Erwin, 72141 Walddorfhäslach (DE)
(74) Vertreter: Heinrich, Hanjo
(86) Internationale Anmeldenummer: PCT/EP2010/007121
(87) Internationale Veröffentlichungsnummer: WO 2011/072797

(56) Entgegenhaltungen:
- DE-A1- 2 841 395
- JP-A- 61 028 475
- US-A- 2 509 276
- US-A- 4 543 908

## Beschreibung

Die Erfindung betrifft ein Verfahren zum Abscheiden von Overspray aus der mit Overspray beladenen Kabinenabluft von Beschichtungsanlagen, insbesondere von Lackieranlagen, bei welchem der Overspray von einem Luftstrom aufgenommen und zu einer elektrostatisch arbeitenden Abscheidevorrichtung geführt wird, wo ein Großteil zumindest der Feststoffe aus dem Overspray an einem Abscheidebereich wenigstens einer Abscheidefläche abgeschieden wird.

Außerdem befasst sich die Erfindung mit einer Vorrichtung zum Abscheiden von Overspray aus der mit Overspray beladenen Kabinenabluft von Lackieranlagen mit
a) wenigstens einer Abscheidefläche, an welcher die Kabinenabluft entlang führbar ist und welche einen Abscheidebereich vorgibt und mit einem Pol einer Hochspannungsquelle verbunden ist;
b) einer im Luftstrom angeordneten Elektrodeneinrichtung, welche der Abscheidefläche zugeordnet und mit dem anderen Pol der Hochspannungsquelle verbunden ist.

Darüber hinaus betrifft die Erfindung eine Anlage zum Beschichten, insbesondere zum Lackieren von Gegenständen, insbesondere von Fahrzeugkarosserien, mit
a) einer Beschichtungskabine, in welcher die Gegenstände mit Beschichtungsmaterial beaufschlagbar sind und durch welche ein Luftstrom geleitet werden kann, der entstehende Overspraypartikel des Beschichtungsmaterials aufnimmt und abführt;
b) einer elektrostatisch arbeitenden Abscheidevorrichtung.

Ein Verfahren und eine Vorrichtung mit den im Oberbegriff der Ansprüche 1 und 15 genannten Merkmalen ist aus DE 2841395 bekannt.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Der Overspray wird von dem Luftstrom in der Lackierkabine erfasst und einer Abscheidung zugeführt, sodass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen bevorzugt Nassabscheidesysteme zum Einsatz. Bei vom Markt her bekannten Nassabscheidern fließt Wasser gemeinsam mit der von oben kommenden Kabinenabluft zu einer die Luftströmung beschleunigenden Düse. In dieser Düse findet eine Verwirbelung der durchströmenden Kabinenabluft mit dem Wasser statt. Bei diesem Vorgang treten die Overspraypartikel weitgehend in das Wasser über, so dass die Luft den Nassabscheider im Wesentlichen gereinigt verlässt und sich die Lack-Overspraypartikel entklebt in dem Wasser befinden. Aus diesem können sie dann wiedergewonnen oder entsorgt werden.

Bei bekannten Nassabscheidern wird verhältnismäßig viel Energie zur Umwälzung der erforderlichen recht großen Wassermengen benötigt. Die Aufbereitung des Spülwassers ist durch den hohen Einsatz an lackbindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat.

Bei vom Markt her bekannten Vorrichtungen der eingangs genannten Art wird demgegenüber auf trockenem Wege abgeschieden, indem von der vorbeiströmenden Kabinenabluft mitgeführte Lack-Overspraypartikel durch die Elektrodeneinrichtung ionisiert werden und auf Grund des zwischen der Abscheidefläche und der Elektrodeneinrichtung aufgebauten elektrischen Feldes zur Abscheidefläche wandern, an welcher sie sich abscheiden. Die an der Abscheidefläche haftenden Lack-Overspraypartikel können dann beispielsweise mechanisch von dieser abgestreift und abtransportiert werden.

Die Reinigungswirkung derartiger Abscheider ist sehr hoch. Für einen kontinuierlichen Betrieb muss jedoch stets dafür gesorgt werden, dass sich zwischen der Abscheidefläche und der Elektrodeneinrichtung ein ausreichend starkes elektrisches Feld ausbilden kann, was nur bis zu einer gewissen Schichtdicke von Lack-Overspray auf der Abscheidefläche möglich ist, da eine solche Schicht isolierend wirkt. Die erforderliche kontinuierliche Entfernung des Lack-Oversprays von der Abscheidefläche ist jedoch mit baulich recht aufwändigen Maßnahmen verbunden und kann störanfällig sein. Es kann zudem vorkommen, dass Overspray an der Abscheidefläche reagiert, aushärtet oder trocknet, so dass dieser nicht mehr durch einfaches Abstreifen von der Abscheidefläche entfernt werden kann.

Aufgabe der vorliegenden Erfindung ist es daher, ein Verfahren, eine Abscheidevorrichtung und eine Anlage der eingangs genannten Art zu schaffen, welche diesen Problemen Rechnung tragen.

Diese Aufgabe wird bei dem Verfahren der eingangs genannten Art dadurch gelöst, dass eine zusammenhängende Materialbahn als Trennmittel verwendet wird, welche zumindest teilweise entlang des Abscheidebereichs der wenigstens einen Abscheidefläche angeordnet ist, und während des Betriebs der Äbscheidevorrichtung dafür gesorgt wird, dass die Materialbahn zumindest im Abscheidebereich der wenigstens einen Abscheidefläche elektrisch leitfähig ist.

Erfindungsgemäß wird somit eine Materialbahn als Trennschicht zwischen der Abscheidefläche und dem Overspray verwendet, so dass dieser nicht mit der Abscheidefläche in Kontakt kommen kann. Eine solches als Materialbahn ausgebildetes Trennmittel kann auf einfache Weise zusammen mit auf diesem abgeschiedenem Overspray von der Abscheidefläche entfernt werden. Die Materialbahn kann stationär an der Abscheidefläche vorhanden sein oder über diese hinweg bewegt werden.

Die Materialbahn ist gut handhabbar, wenn sie flexibel ist.

Es konnten gute Ergebnisse mit einer Materialbahn erzielt werden, die ein Cellulosematerial oder ein Kunststoffmaterial umfasst.

Damit die Materialbahn nicht von der Abscheidefläche abgleiten kann, ist es günstig, wenn die Materialbahn mit einem Haftmittel versehen wird, so dass sie wenigstens im Abscheidebereich an der wenigstens einen Abscheidefläche haftet.

Besonders sind Haftmittel gut, die ein Lösemittel, insbesondere Wasser, umfassen. Gegebenenfalls kann bereits Wasser allein als Haftmittel ausreichen.

Wenn das Haftmittel eine Methylcellulose umfasst, kann ein Haftmittel mit adhäsiven Eigenschaften erzeugt werden. Hierdurch kann eine sichere Haftung der Materialbahn gewährleistet werden, ohne die leichte Entfernung derselben einzuschränken.

Wenn ein elektrisch leitfähiges Haftmittel verwendet wird, kann die Materialbahn auch aus einem Material bestehen, welches an sich nicht elektrisch leitfähig ist. In diesem Fall hat sich besonders Papier als vorteilhaft erwiesen.

Wenn die Materialbahn intermittierend oder kontinuierlich in Strömungsrichtung des Luftstroms oder entgegengesetzt zur Strömungsrichtung des Luftstroms über den Abscheidebereich der Abscheidefläche bewegt wird, kann das Entfernen von mit Overspray beladener Materialbahn und das Nachführen von unbeladener Materialbahn in einem steten Prozess durchgeführt werden.

Dabei ist es günstig, wenn die Materialbahn intermittierend oder kontinuierlich von einer Rolle abgewickelt wird. Auf diese Weise ist auf einfache Art über einen vorgegebenen Zeitraum eine Materialnachführung sichergestellt.

Die wenigstens eine Abscheidefläche kann parallel zur Horizontalen verlaufen oder alternativ gegen die Horizontale geneigt sein.

Die Nachführung der Materialbahn kann wirkungsvoll unterstützt werden, wenn die wenigstens eine Abscheidefläche durch ein dem Luftstrom zugewandtes Trum eines endlos umlaufenden Bandes bereitgestellt wird. Dieses kann dann gemeinsam mit der Materialbahn in Umlaufrichtung bewegt werden.

Alternativ kann die wenigstens eine Abscheidefläche durch eine Abscheideplatte bereitgestellt werden.

Es ist günstig, wenn mit Overspray beladene Materialbahnabschnitte einem Sammelbehälter zugeführt werden. Das beladene Material kann dann einfach entnommen und einer Aufbereitung zugeführt werden.

Bei einer Vorrichtung der eingangs genannten Art wird die oben gestellte Aufgabe dadurch gelöst, dass
c) eine zusammenhängende Materialbahn als Trennmittel zumindest teilweise entlang des Abscheidebereichs der wenigstens einen Abscheidefläche angeordnet ist, wobei die Materialbahn während des Betriebs der Abscheidevorrichtung zumindest im Abscheidebereich der wenigstens einen Abscheidefläche elektrisch leitfähig gehalten ist.

Im Hinblick auf das Trennmittel bzw. die Materialbahn gilt das oben zum Verfahren Gesagte.

Was das Haftmittel betrifft ist es günstig, wenn eine Beschichtungseinrichtung vorgesehen ist, mit der die Materialbahn mit Haftmittel versehen werden kann, so dass die Materialbahn an der wenigstens einen Abscheidefläche haftet. Ansonsten gilt für das Haftmittel ebenfalls das oben zum Verfahren Gesagte.

Für die oben angesprochene Bewegung der Materialbahn ist es vorteilhaft, wenn eine Zuführeinrichtung vorgesehen ist, mittels welcher die Materialbahn intermittierend oder kontinuierlich in Strömungsrichtung des Luftstroms oder entgegengesetzt zur Strömungsrichtung des Luftstroms über den Abscheidebereich der Abscheidefläche bewegbar ist.

Auch zu der wenigstens einen Abscheidefläche gilt das oben zum Verfahren Gesagte.

Bei der eingangs genannten Anlage wird die oben angegebene Aufgabe dadurch gelöst, dass
c) die elektrostatische Abscheidevorrichtung nach einem der Ansprüche 15 bis 27 ausgebildet ist.

Die erfindungsgemäße Anlage umfasst also eine Abscheidevorrichtung mit einem oder mehreren der oben zur Vorrichtung genannten Merkmale. Die damit erzielbaren Vorteile entsprechen den oben zum Verfahren und zur Vorrichtung erläuterten Vorteilen.

Ausführungsbeispiele der Erfindung werden nachfolgend anhand der Zeichnungen näher erläutert. In diesen zeigen:
- Figur 1: eine Lackierkabine einer Oberflächenbehandlungsanlage mit einem ersten Ausführungsbeispiel einer Overspray-Abscheidevorrichtung in einer Vorderansicht;
- Figur 2: eine perspektivische Ansicht -einer einzelnen Abscheideeinheit mit einer einzelnen Elektrodeneinrichtung der Abscheidevorrichtung von Figur 1;
- Figur 3: eine der Figur 1 entsprechende Ansicht der Lackierkabine mit einer Abwandlung der Abscheidevorrichtung;
- Figur 4: eine der Figur 1 entsprechende Ansicht der Lackierkabine mit einer weiteren Abwandlung der Abscheidevorrichtung;
- Figur 5: eine der Figur 1 entsprechende Ansicht der Lackierkabine mit einem zweiten Ausführungsbeispiel der Abscheidevorrichtung;
- Figur 6: eine perspektivische Ansicht von vier Abscheideeinheiten sowie von vier Elektrodeneinrichtungen der Abscheidevorrichtung von Figur 5;
- Figur 7: einen Schnitt entlang der Schnittlinie VII-VII in Figur 5.

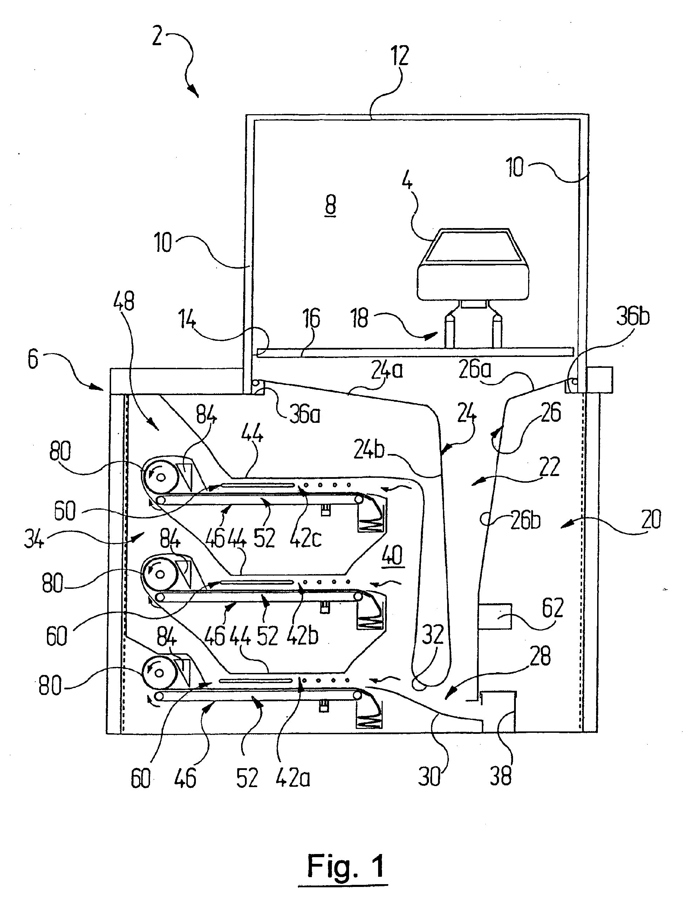

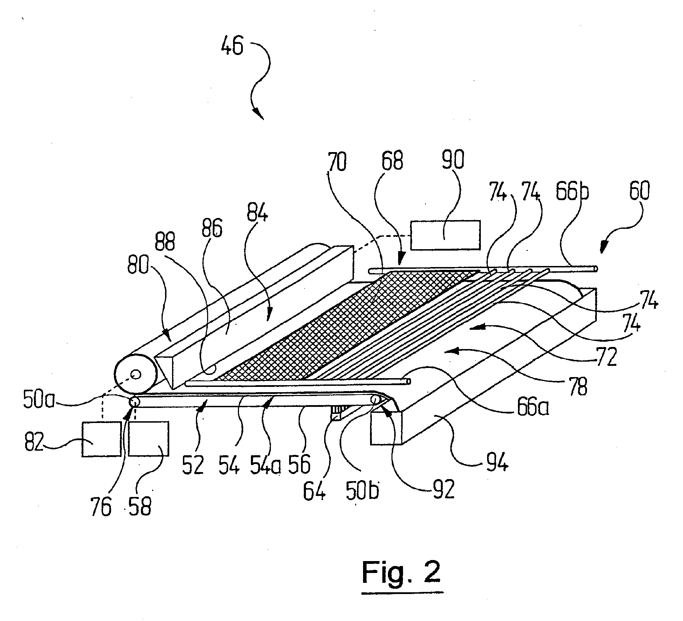

Zunächst wird auf die Figuren 1 und 2 Bezug genommen. Dort ist mit 2 insgesamt eine Lackierkabine einer Oberflächenbehandlungsanlage bezeichnet, in welcher Fahrzeugkarosserien 4 lackiert werden, nachdem sie in der Lackierkabine 2 vorgelagerten, nicht eigens gezeigten Vorbehandlungsstationen z.B. gereinigt und entfettet wurden. Die Lackierkabine 2 ruht auf einem Stahlbau 6, wie es an und für sich bekannt ist.

Die Lackierkabine 2 umfasst einen oben angeordneten Lackiertunnel 8, welcher von vertikalen Seitenwänden 10 und einer horizontalen Kabinendecke 12 begrenzt, jedoch an den Stirnseiten und nach unten hin in der Weise offen ist, dass mit Overspray beladene Kabinenabluft nach unten strömen kann. Die Kabinendecke 12 ist in üblicher Weise als untere Begrenzung eines Luftzuführraumes (nicht dargestellt) mit Filterdecke ausgebildet.

Auf Höhe der von den unteren Rändern der Seitenwände 10 flankierten unteren Öffnung 14 des Lackiertunnels 8 ist ein Stahlbau 16 angeordnet, welcher ein an und für sich bekanntes Fördersystem 18 trägt, auf welches hier nicht näher eingegangen wird. Mit diesem können zu lackierende Fahrzeugkarosserien 4 von der Eingangsseite des Lackiertunnels 8 zu dessen Ausgangsseite transportiert werden. Im Inneren des Lackiertunnels 8 befinden sich nicht eigens gezeigte Applikationseinrichtungen, mittels welcher die Fahrzeugkarosserien 4 in an und für sich bekannter Weise mit Lack beaufschlagt werden können. Die untere Öffnung 14 des Lackiertunnels 8 ist durch einen nicht eigens gezeigten begehbaren Gitterrost abgedeckt.

Unterhalb der Lackierkabine 2 befindet sich ein Anlagenbereich 20, in welchem die von der Kabinenluft mitgeführten Overspraypartikel von der Kabinenluft getrennt werden. Der Anlagenbereich 20 ist von einem nicht eigens mit einem Bezugszeichen versehenen Gehäuse begrenzt, welches in Figur 1 lediglich mit gestrichelten Linien angedeutet ist.

Der Anlagenbereich 20 umfasst einen Strömungsbereich 22, welcher nach oben zur Lackierkabine 2 hin offen ist und durch zwei Luftleitbleche 24 und 26 vorgegeben ist. Das in Figur 1 linke Luftleitblech 24 umfasst einen von außen nach innen betrachtet zunächst moderat nach unten geneigten Abschnitt 24a, welcher in einen Abschnitt 24b mit starkem Gefälle übergeht. In entsprechender Weise umfasst das in Figur 1 rechte Luftleitblech 26 einen verhältnismäßig wenig nach unten geneigten Abschnitt 26a und einen steilen Abschnitt 26b.

Die Luftleitbleche 24 und 26 münden unten in einen Umlenkbereich 28, in dem ein unteres Leitblech 30 und ein das Luftleitblech 24 fortsetzender Bogenabschnitt 32 dafür sorgen, dass die von oben nach unten strömende Kabinenluft in Figur 1 nach links in einen neben dem Strömungsbereich 22 angeordneten Anlagenbereich 34 strömt.

Aus seitlich neben den Luftleitblechen 24 und 26 angebrachten Verteilerrinnen 36a, 36b kann eine Abscheideflüssigkeit auf die Luftleitbleche 24 und 26 und in einer weitgehend zusammenhängenden Schicht an deren zur Lackierkabine 2 weisenden Außenfläche nach unten fließen. Die Abscheideflüssigkeit nimmt einen Teil des von der Kabinenluft mitgeführten Oversprays auf, während die Kabinenluft von der Lackierkabine 2 nach unten zum Umlenkbereich 28 strömt.

Die mit Overspray beladene Abscheideflüssigkeit fließt über das untere Leitblech 30 in einen auf der vom Anlagenbereich 34 abliegenden Seite des Luftleitblechs 26 angeordneten Sammelbehälter 38. Von dort kann die Abscheideflüssigkeit einem Reinigungs- und Aufbereitungsprozess zugeführt werden, in welchem sie in an und für sich bekannter Weise von dem Lack-Overspray befreit wird. Sodann kann die Abscheideflüssigkeit in einem Kreislauf wieder den Verteilerrinnen 36 zugeführt werden.

Der Anlagenbereich 34 umfasst einen Verteilerraum 40, welcher die aus dem Umlenkbereich 28 kommende Kabinenluft in drei übereinander angeordnete Abscheideräume 42a, 42b, 42c leitet, die oben jeweils durch ein Luftleitblech 44 begrenzt sind. Die Luftleitbleche 44 sind aus isolierendem Material.

Jeder Abscheideraum 42a, 42b, 42c ist unten durch mehrere, in Längsrichtung der Lackierkabine 2 hintereinander angeordnete Abscheideeinheiten 46 einer elektrostatisch arbeitenden Abscheidevorrichtung 48 begrenzt. Üblicherweise beträgt die Arbeitstemperatur der Abscheidevorrichtung 48 unter 28°C. Eine Abscheideeinheit 46 ist in Figur 2 nochmals im Detail gezeigt.

Nachdem die Kabinenluft die Abscheidevorrichtung 48 bzw. die Abscheideräume 42a, 42b, 42c in im wesentlichen horizontaler Richtung von in Figur 1 rechts nach links durchströmt hat, wird sie zu einer nicht dargestellten Luft-Konditioniereinrichtung geführt, mit welcher die gereinigte Luft wieder auf die richtige Temperatur und Luftfeuchtigkeit gebracht wird, so dass sie erneut dem Luftzuführraum oberhalb der Lackierkabine 2 zugeleitet werden kann, wo sie gegebenenfalls mit unverbrauchter Frischluft gemischt wird.

Jede Abscheideeinheit 46 umfasst ein auf zwei Rollen 50a, 50b umlaufendes Abscheideband 52 mit einem dem zugehörigen Abscheideraum 42 zugewandten Abscheidetrum 54 und einem von dem zugehörigen Abscheideraum 42 abliegenden Rücklauftrum 56. Das Abscheideband 52 ist mittels eines Motors 58 angetrieben, welcher mit der Rolle 50a zusammenarbeitet und nur in Figur 2 gezeigt ist.

Die Abscheideeinheiten 46 sind in jedem Abscheideraum 42a, 42b, 42c derart angeordnet, dass die Abscheidetrums 54 der jeweiligen Abscheidebänder 52 miteinander fluchten.

Jede Abscheideeinheit 46 umfasst eine Elektrodeneinrichtung 60, welche unter Einhaltung eines Abstandes parallel zum Abscheidetrum 54 des Abscheidebandes 52 angeordnet ist.

Jede Elektrodeneinrichtung 60 ist mit einem Pol einer ihr zugeordneten Hochspannungsquelle 62 verbunden, von denen in Figur 1 nur eine einzige schematisch angedeutet ist. Das Abscheideband 52 ist über einen Bürstenschleifkontakt 64 mit dem auf Massepotential liegenden Pol der Hochspannungsquelle 62 verbunden, welcher das Rücklauftrum 56 des Abscheidebandes 52 kontaktiert. Das Abscheideband 52 kann ergänzend aus einem elektrisch isolierenden Material gefertigt sein, beispielsweise aus einem elektrisch isolierenden Kunststoff.

In einer Abwandlung können auch alle Elektrodeneinrichtungen 60 von einer einzigen gemeinsamen Hochspannungsquelle gespeist werden.

Jede Elektrodeneinrichtung 60 umfasst zwei gerade, parallel zueinander verlaufende Elektrodenleisten 66a, 66b (siehe Figur 2). Diese halten in einem Feldabschnitt 68 der Elektrodeneinrichtung 60 eine Gitterelektrode 70, deren zwischen den Elektrodenleisten 66a, 66b verlaufende Ränder senkrecht zu diesen stehen. In einem Koronaabschnitt 72 der Elektrodeneinrichtung 60 halten die Elektrodenleisten 66a, 66b mehrere als Sprühelektrode wirkende Koronadrähte 74. Die Koronadrähte 74 verlaufen in einer durch die Elektrodenleisten 66a, 66b vorgegebenen Ebene senkrecht zu diesen und sind in gleichen Abständen zueinander angeordnet.

Die Anzahl der Koronadrähte 74 der Elektrodeneinrichtung 60 und deren Abstand voneinander können abhängig von dem Abscheideverhalten der Overspraypartikel variieren. Beim vorliegenden Ausführungsbeispiel sind vier Koronadrähte 74 je Elektrodeneinrichtung 60 vorgesehen.

Der Bereich des Abscheidetrums 54 des Abscheidebandes 52, an dem sich Overspray abscheiden kann, definiert einen Abscheidebereich 54a des Abscheidetrums 54 bzw. des Abscheidebandes 52.

An einem ersten Ende 76 des Abscheidebandes 52 wird dessen Abscheidetrum 54 ein Trennmittel in Form einer Materialbahn 78 zugeführt. Durch die Materialbahn 78 als Trennmittel wird verhindert, dass sich abgeschiedener Overspray an dem Abscheidetrum 54 des Abscheidebandes 52 anlagert. Die Materialbahn 78 wird hierzu von einer Wickelrolle 80 abgewickelt. Hierzu kann die Wickelrolle 80 mittels eines Motors 82 um ihre Längsachse verdreht werden, der lediglich in Figur 2 gezeigt ist. Die Wickelrolle 80 ist von außen zugänglich verdrehbar gelagert, so dass sie gegen eine neue Wickelrolle 80 ausgetaucht werden kann, wenn sie vollständig abgewickelt wurde.

Beim vorliegenden Ausführungsbeispiel wird eine Papierbahn 78 verwendet, die von einer Papierrolle 80 abgewickelt wird. Cellulosematerialen sind grundsätzlich geeignet, alternativ kann jedoch auch ein Kunststoffmaterial verwendet werden.

Um zu gewährleisten, dass die Papierbahn 78 an dem Abscheidetrum 54 des Abscheidebandes 52 haftet, ist zwischen der Wickelrolle 80 und der Elektrodeneinrichtung 60 eine Beschichtungseinrichtung 84 angeordnet, durch welche die Papierbahn 78 mit einem Haftmittel 86 beaufschlagt wird. Dies ist auch bei anderen Materialien als Papier erforderlich. Hierzu hat die Beschichtungseinrichtung 84 einen Abgabeschlitz 88, der gesteuert geöffnet oder verschlossen werden kann, so dass eingestellt werden kann, in welcher Menge das Haftmittel abgegeben wird. Alternativ kann die Beschichtungseinrichtung 84 z.B. auch nach Art einer Kleistermaschine ausgebildet sein, wie es an und für sich bekannt ist.

Die Bürstenschleifkontakt 64 ist in jedem Fall so angeordnet, dass die Materialbahn 78 und gegebenenfalls das Haftmittel 86 auf Massepotential liegt.

Die Beschichtungseinrichtung 82 ist geerdet und wird von einem nur in Figur 2 gezeigten Haftmittel-Reservoir 90 gespeist. In der Praxis hat sich ein Wasser/Methylcellulose-Gemisch als Haftmittel 86 als gut erwiesen, insbesondere in Verbindung mit einer Papierbahn 78. Gegebenenfalls kann auch Wasser allein als Haftmittel 86 ausreichen. Alternativ kommen auch andere Lösemittel als Wasser in Frage.

Die Papierbahn 78 wird von dem Haftmittel 86 durchtränkt, so dass das Haftmittel 86 zwischen die Papierbahn 78 und das obere Trum 54 des Abscheidebandes 52 gelangt.

Die Papierbahn 78 muss dort, wo Overspray abgeschieden werden soll, elektrisch leitfähig sein. Wenn eine Materialbahn aus Kunststoff verwendet wird, kann gegebenenfalls ein elektrisch leitfähiger Kunststoff eingesetzt werden. Bei der Papierbahn 78 oder sonstigen Materialbahnen 78 aus an sich nicht elektrisch leitfähigen Materialien wird die elektrische Leitfähigkeit durch das Haftmittel 86 erzeugt, welches dazu elektrisch leitfähig sein muss. Die Leitfähigkeit des Trennmittels ist grundsätzlich so, dass Ladung abfließen kann, und liegt vorzugsweise im Bereich von 50 bis 5000 µS/cm, insbesondere von 1000 bis 3000 µS/cm. Die Leitfähigkeit des Trennmittels kann gegebenenfalls über Zusätze zum Haftmittel 86, wie beispielsweise Salze, eingestellt werden.

Am dem der Papierrolle 80 gegenüberliegenden zweiten Ende 92 des Abscheidebandes 52 ist ein Sammelbehälter 94 angeordnet, in welchen mit abgeschiedenem Overspray beladenes Papier der Papierbahn 78 gelangt, nachdem es über den Abscheidebereich 54a des Abscheidebandes 52 bewegt wurde.

Gegebenenfalls kann im Bereich des Sammelbehälters 94 eine hier nicht eigens gezeigte Schneidvorrichtung angeordnet sein, so dass mit abgeschiedenem Overspray beladene Papierabschnitte in regelmäßigen Zeitabständen von der Papierbahn 78 abgeschnitten werden können, die dann in den Sammelbehälter 94 fallen.

Die oben beschriebene Lackierkabine 2 funktioniert nun wie folgt:
Beim Lackieren der Fahrzeugkarosserien 4 im Lackiertunnel 8 wird die dort befindliche Kabinenluft mit Lack-Overspraypartikeln beladen. Diese können noch flüssig und/oder klebrig, aber auch schon mehr oder weniger fest sein. Die mit Lack-Overspray beladene Kabinenabluft strömt durch die untere Öffnung 14 des Lackiertunnels 8 in den ersten Strömungsbereich 22 des unteren Anlagenbereichs 20. Dort wird diese Luft durch die Luftleitbleche 24, 26 zum Umlenkbereich 28 geleitet, wobei bereits ein Teil des Oversprays von der an den Luftleitblechen 24, 26 herabfließenden Abscheideflüssigkeit aufgenommen wird.

Die Kabinenluft wird durch den Umlenkbereich 28 in Richtung auf den Verteilerraum 40 und von dort in die Abscheideräume 42a, 42b, 42c mit den Abscheideeinheiten 46 umgelenkt, wo sie zwischen dem Abscheidetrum 54 des jeweiligen Abscheidebandes 52 bzw. der auf diesem angeordneten Papierbahn 78 und dem jeweiligen oberen Luftleitblech 44 hindurch strömt.

An den Koronadrähten 74 der Elektrodeneinrichtungen 60 kommt es in an und für sich bekannter Weise zu Koronaentladungen, durch welche die Overspraypartikel in der vorbeiströmenden Kabinenabluft effektiv ionisiert werden.

Die ionisierten Overspraypartikel passieren das auf Massepotential liegende Abscheideband 52 und die Gitterelektroden 70 im Feldabschnitt 68 der Elektrodeneinrichtungen 60. Auf Grund des zwischen den Koronadrähten 74 sowie der Gitterelektrode 70 und dem Abscheideband 52 ausgebildeten elektrischen Feldes scheiden sich die ionisierten Overspraypartikel an der Papierbahn 78 im Abscheidebereich 54a des Abscheidetrums 54 des Abscheidebandes 52 ab und bleiben zu einem Großteil an der Papierbahn 78 haften.

Der größte Teil der ionisierten Overspraypartikel scheidet sich bereits im Koronaabschnitt 72 der Elektrodeneinrichtungen 60 an dem Abscheideband 52 bzw. der Papierbahn 78 ab. Das zwischen den Koronadrähten 74 und dem jeweiligen Abscheideband 52 jeder Abscheideeinheit 46 vorhandene elektrische Feld ist jedoch inhomogener als das elektrische Feld im Bereich der jeweiligen Gitterelektrode 70, weshalb dort ein gerichteteres Abscheiden der ionisierten Overspraypartikel an dem entsprechenden Abscheideband 52 erfolgt. Hierdurch werden auch die Overspraypartikel, welche den Koronaabschnitt 72 passiert haben, im Feldabschnitt 68 effektiv abgeschieden.

Die beim Durchgang durch die Abscheideeinheiten 46 gereinigte Luft wird, wie oben erwähnt, nach einer gewissen Konditionierung wieder dem Lackiertunnel 8 zugeführt.

Während des Betriebs der Abscheidevorrichtung 48 werden die Wickelrollen 80 kontinuierlich abgewickelt und die abgewickelte Papierbahn 78 durch die Beschichtungseinrichtung 84 kontinuierlich mit dem elektrisch leitfähigen Haftmittel 86 durchtränkt. Das Abscheideband 52 wird mittels des Motors 58 mit einer Umlaufgeschwindigkeit betrieben, die auf die Vortriebsgeschwindigkeit der Papierbahn 78 abgestimmt ist, so dass sich die Papierbahn 78 und das obere Abscheidetrum 54 des Abscheidebandes 52 mit gleicher Geschwindigkeit in Richtung auf den Sammelbehälter 94 bewegen. Die Umlaufrichtungen der Wickelrollen 80 und der Abscheidebänder 52 sind in Figur 1 durch entsprechende gekrümmte Pfeile veranschaulicht. Die Papierbahn 78 wird auf diese Weise mittels des Abscheidebandes 52 in Richtung auf den Sammelbehälter 94 gefördert und bewegt sich entgegen der Strömungsrichtung der Kabinenluft, die in Figur 1 durch Wellenpfeile angedeutet ist.

In der Praxis konnten bei Geschwindigkeiten der Papierbahn 78 und des Abscheidebandes 52 ab 0,01 m min⁻¹ bereits gute Ergebnisse erzielt werden. Bei größerem Oversprayanteil kann die Geschwindigkeit auf Werte von bis zu 5 m min⁻¹ erhöht werden.

Im Abscheidebereich 54a des Abscheidetrums 54 des Abscheidebandes 52 scheidet sich Overspray auf der Papierbahn 78 ab und wird durch den Vortrieb der Papierbahn 78 kontinuierlich aus dem Abscheidebereich 54a herausbewegt.

Alternativ kann die Papierbahn 78 auch intermittierend von der Papierrolle 80 abgewickelt werden. In diesem Fall bleibt die Papierbahn 78 zunächst ohne Vortrieb auf dem Abscheidetrum 54 des Abscheidebandes 52, welches seinerseits ebenfalls stillsteht.

Für einen ordnungsgemäßen Betrieb der Abscheideeinheit 46 muss dafür gesorgt werden, dass sich zwischen dem Abscheideband 52 und der Elektrodeneinrichtungen 60 ein ausreichend starkes elektrisches Feld ausbilden kann, was nur bis zu einer gewissen Schichtdicke von abgeschiedenem Lack-Overspray auf der Papierbahn 78 möglich ist, da eine solche Schicht isolierend wirkt.

Darüber hinaus wandern Feststoffpartikel aus dem abgeschiedenen Overspray von der Oberfläche der Papierbahnen 78 in diese hinein. Nach einer gewissen Betriebsdauer besteht die Gefahr, dass Feststoffpartikel und vor allem Bindemittelbestandteile bis zum Abscheidetrum 54 des Abscheidebandes 52 wandern und sich dort absetzen, was die Funktionsfähigkeit der Abscheideeinheit 46 stark beeinträchtigen und eine aufwändigen Reinigung und Wartung erfordern würde.

Dieses Problem stellt sich nicht, wenn die Papierbahn 78 kontinuierlich über den Abscheidebereich 54a des Abscheidetrums 54 bewegt wird.

Bei eine zeitweise stationären Papierbahn 78 kann der Koronastrom als Indikator für die Beladung des Abscheidetrum 54 bzw. der Papierbahn 78 mit Overspray genutzt werden. Auf Grund der Isolationswirkung des an der Papierbahn 78 haftenden Oversprays verringert sich der Koronastrom mit zunehmender Dicke der Overspray-Schicht. Der Koronagrenzstrom wird in der Regel empirisch ermittelt und beträgt üblicherweise einige Milliampere pro Elektrodeneinrichtung 60.

Wenn also ein Austausch der mit Overspray beladenen Papierbahn 78 angezeigt ist, werden die Wickelrolle 80 und das Abscheideband 52 solange synchronisiert angetrieben, bis der mit Overspray beladene Abschnitt der Papierbahn 78 in den Sammelbehälter 94 gefördert worden ist. Dann ist der Abscheidebereich 54a des Abscheidetrums 54 wieder mit unbeladner Papierbahn 78 abgedeckt.

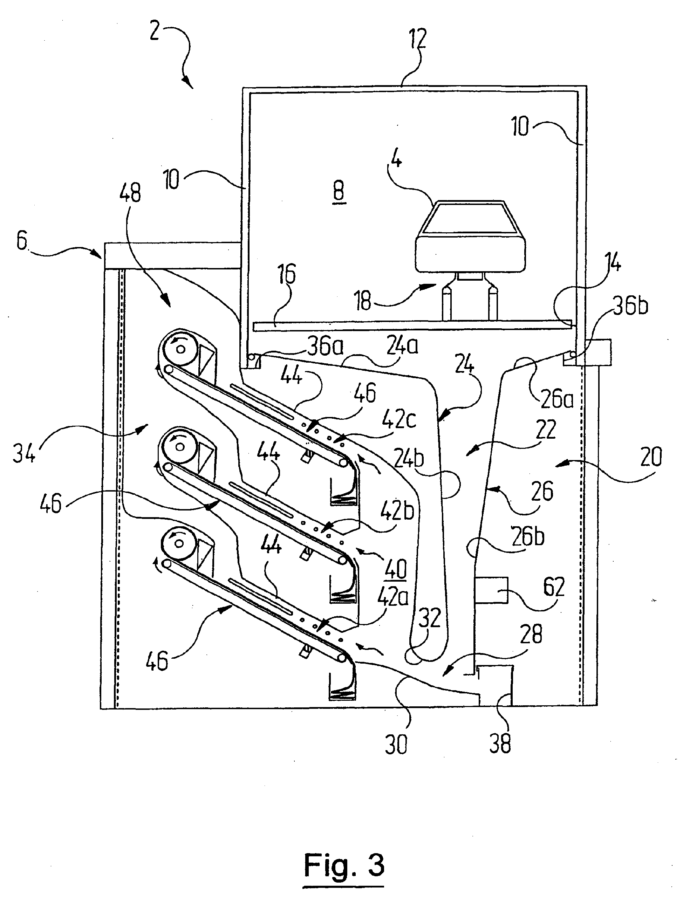

In Figur 3 ist die Lackierkabine 2 gezeigt, bei welcher in Abwandlung der Abscheidevorrichtung 48 das jeweilige Abscheideband 52 der Abscheideeinheiten 46 derart angeordnet sind, dass das jeweilige Abscheidetrum 54 gegenüber der Horizontalen geneigt ist.

Grundsätzlich kann das Abscheidetrum 54 des Abscheidebandes 52 jeden Winkel zur Horizontalen einnehmen, gegebenenfalls auch einen Winkel von 90°, so dass die Kabinenluft in vertikaler Richtung von unten nach oben oder von oben nach unten an den Abscheideeinheiten 46 entlang strömt. Auch bei einem Winkel gegenüber der Horizontalen zwischen 0° und 90° können die Abscheideeinheiten 46 wahlweise so angeordnet sein, dass die Kabinenluft schräg nach oben oder schräg nach unten strömen muss.

Die übrigen Komponenten der Abscheidevorrichtung 48 sind entsprechend an die Lage der Abscheidebänder 52 angepasst angeordnet, sofern dies erforderlich ist.

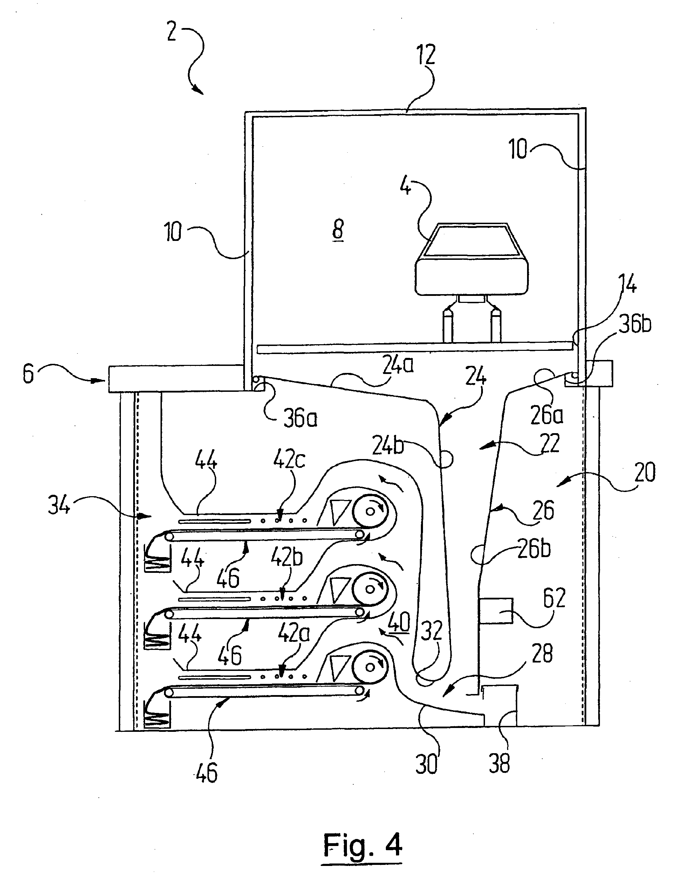

In Figur 4 ist die Lackierkabine 2 gezeigt, bei welcher in weiterer Abwandlung der Abscheidevorrichtung 48 die Papierbahnen 78 nicht entgegengesetzt zu der Strömungsrichtung der Kabinenluft, sondern in diese Strömungsrichtung abgewickelt und zum Sammelbehälter 94 gefördert werden. Bei einer weiteren, hier nicht eigens gezeigten Anordnung können auch in diesem Fall die Abscheidebänder 52 gegen die Horizontale geneigt sein.

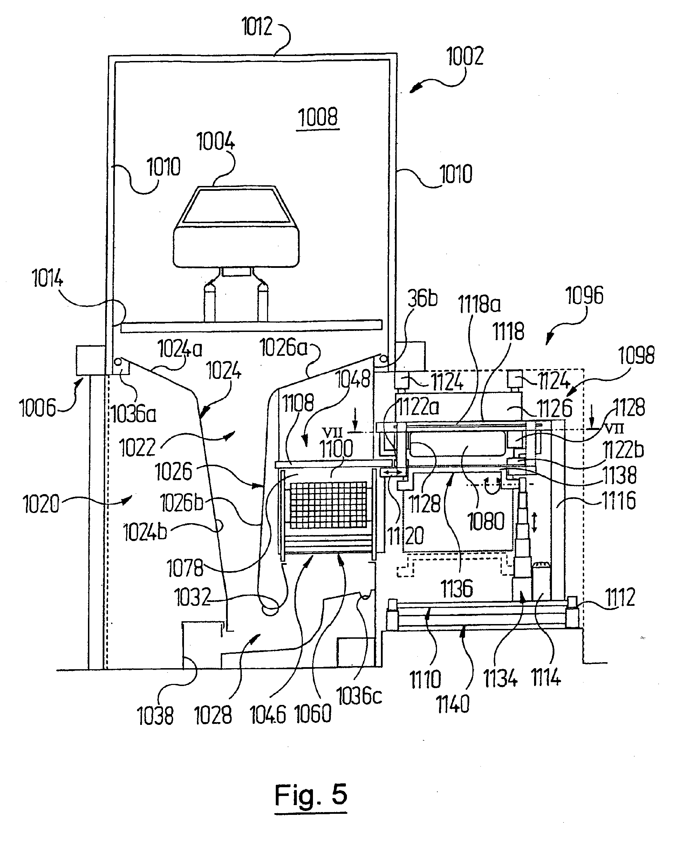

In Figur 5 ist als weiteres Ausführungsbeispiel eine Lackierkabine 1002 gezeigt. Komponenten, welche denjenigen der Lackierkabine 2 nach den Figuren 1 bis 4 entsprechen, tragen dort dieselben Bezugszeichen zuzüglich 1000.

Bei der Lackierkabine 1002 umfasst die Abscheidevorrichtung 1048 eine Abscheideeinheit 1046, welche im Anlagenbereich 1034 angeordnet ist, und außerdem eine Trennmittel-Erneuerungseinrichtung 1096, welche in einem Trennmittel-Erneuerungsbereich 1098 angeordnet ist.

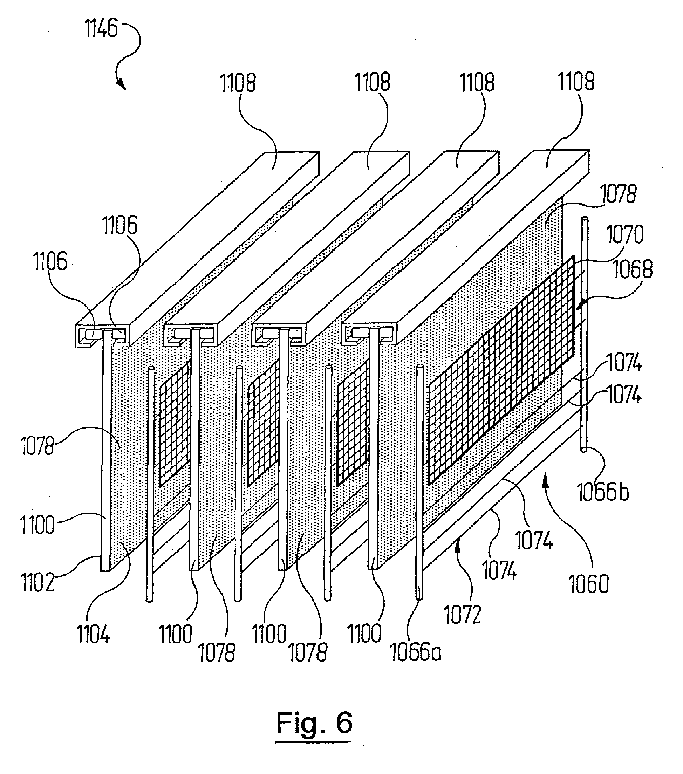

Die Abscheideeinheit 1046 umfasst eine Vielzahl von in Längsrichtung der Lackierkabine 1002 parallel zueinander und hintereinander angeordneten rechteckigen Abscheideplatten 1100, von denen vier in Figur 6 gezeigt sind. Die jeweiligen gegenüberliegenden Außenflächen der Abscheideplatte 1100 bilden einen jeweiligen Abscheidebereich definierende Abscheideflächen 1102 bzw. 1104, von denen in Figur 6 nur diejenigen der ganz links gezeigten Abscheideplatte 1100 mit Bezugzeichen versehen sind.

An ihren oberen Eckbereichen lagert die Abscheideplatte 1100 auf jeder Seite jeweils eine Laufrollen 1106, von denen nur in Figur 6 jeweils zwei an einer der Ecken zu erkennen sind. Auch tragen in Figur 6 nur die Laufrollen 1106 der dort ganz links gezeigten Abscheideplatte 1100 Bezugszeichen.

Die Abscheideeinheit 1046 umfasst für jede Abscheideplatte 1100 jeweils eine Führungsschiene 1108, welche als im Querschnitt C-förmige Profile ausgebildet sind. Die Führungsschienen 1108 sind horizontal angeordnet, wobei die Öffnung des "C" nach unten weist. Die Abscheideplatten 1100 laufen mittels ihrer Laufrollen 1106 in jeweils einer der Führungsschienen 1108 und können in Figur 5 nach rechts aus dem Anlagenbereich 1034 heraus in den Trennmittel-Erneuerungsbereich 1098 gefahren werden. In ihrer Betriebsposition sind die Abscheideplatten 1100 in ihrer zugehörigen Führungsschiene 1108 im Anlagenbereich 1034 angeordnet und in dieser arretiert.

Jede Abscheideplatte 1100 ist auf beiden Abscheideflächen 1102 und 1104 jeweils mit einer Papierbahn 1078 belegt, die mit Haftmittel 1086 getränkt ist.

Die Trennmittel-Erneuerungseinrichtung 1096 umfasst einen Schlitten 1110, der auf einem Schienenpaar 1112 verfahrbar ist, welches in Längsrichtung der Lackierkabine 1002 verläuft, so dass der Schlitten 1110 entlang der gesamten Abscheideeinheit 1046 verfahren werden kann. Der Schlitten 1110 wird mittels einer Motor/Steuereinheit 1114 angetrieben. Eine vom Schlitten 1110 mitgeführte Tragsäule 1116 hält eine Führungsschiene 1118, welche auf einem Höhenniveau oberhalb der Führungsschienen 1108 der Abscheideeinheit 1046 angeordnet ist.

Die Führungsschiene 1118 weist eine seitliche Führung 1118a auf, in welcher ein Klemmschuh 1120 verfahrbar geführt ist, was in Figur 5 durch einen horizontalen Doppelpfeil gezeigt ist. Der Klemmschuh 1120 wird ebenfalls durch die Motor/ Steuereinheit 1114 angesteuert.

Die Führungsschiene 1118 trägt außerdem zwei kurze Schienenprofile 1122a, 1122b, welche in einem Abstand voneinander angeordnet sind, der an den Abstand der Laufrollen 1106 an den Ecken der Abscheideplatten 1100 angepasst ist. Der Abstand zwischen dem ersten Schienenprofil 1122a und einer entsprechenden Führungsschiene 1108 der Abscheideeinheit 1046 ist dabei so gering, dass eine Abscheideplatte 1100 problemlos auf ihren Laufrollen 1106 aus der Führungsschiene 1108 heraus in das erste Schienenprofil 1122a hinein fahren kann.

Der Klemmschuh 1120 ist unterhalb der Schienenprofile 1122a, 1122b angeordnet und so verfahrbar gelagert, dass er bei seiner Bewegung nicht mit den Schienenprofilen 1122a, 1122b oder deren Befestigungskomponenten kollidiert.

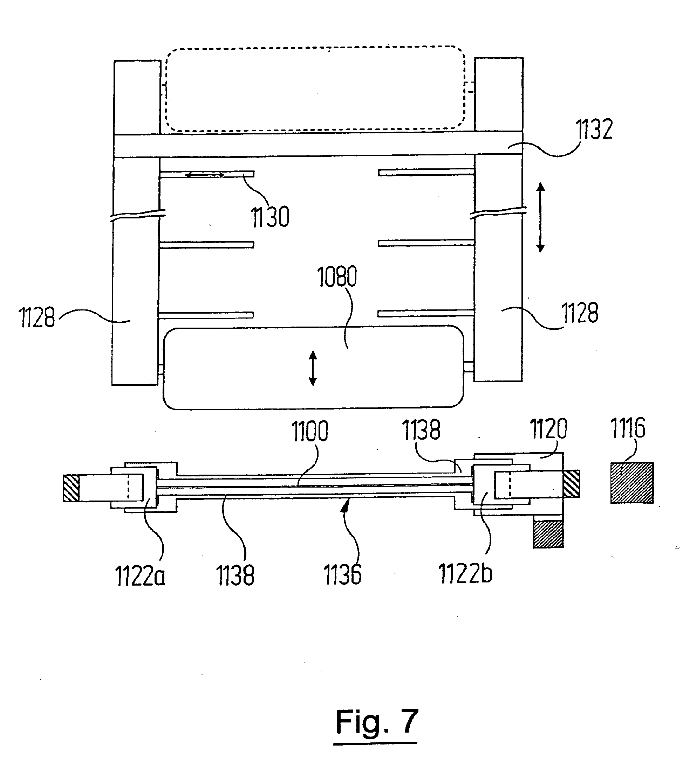

An der nur gestrichelt angedeuteten Decke des Trennmittel-Erneuerungsbereichs 1098 verläuft ein Schienenpaar 1124, in welchen ein Hängeschlitten 1126 verfahren werden kann. Dieser trägt an seiner Unterseite zwei horizontale Laufschienen 1128, zwischen denen die Materialrolle 1080 in Längsrichtung der Lackierkabine 1002 zwischen zwei in Figur 7 zu erkennenden Endpositionen verfahren werden kann. Der Abstand zwischen diesen Endpositionen entspricht etwa der doppelten vertikalen Erstreckung der Abscheideplatten 1100.

Die Wickelrolle 1080 kann während ihrer Bewegung von ihrer ersten zu ihrer zweiten Endposition in den Laufschienen 1128 abgewickelt werden und zugleich mittels der nicht eigens gezeigten Beschichtungseinrichtung 1084, die z.B. von den Laufschienen 1128 gehalten ist, mit Haftmittel 1086 getränkt werden, so dass sich eine entsprechende Materialbahn 1078 in einer horizontalen Ebene zwischen den Laufschienen 1128 aufspannt. Um diese Materialbahn 1078 vorübergehend zu halten, können Haltestifte 1130 horizontal in den Raum zwischen den Laufschienen 1128 hinein und wieder aus diesem zurück gefahren werden. Dies ist durch einen Doppelpfeil angedeutet, der dem als einzigen mit Bezugszeichen versehenen Haltestift zugeordnet ist. Außerdem ist eine Schneideinrichtung 1132 vorgesehen, mittels welcher eine Materialbahn 1078 von der Wickelrolle 1080 abgeschnitten werden kann.

Der Schlitten 1110 führt zudem eine Teleskopeinrichtung 1134 mit sich, durch welche eine Abstreifeinrichtung 1136 in vertikaler Richtung angehoben und abgesenkt werden kann. Die Teleskopeinrichtung 1134 wird ebenfalls mittels der Motor/Steuereinheit 1114 angetrieben.

Die Abstreifeinrichtung 1136 umfasst zwei Abstreifelemente 1138, welche auf beiden Seiten einer Abscheideplatte 1100 angeordnet werden können, die in die kurzen Schienenprofilen 1122a, 1122b eingefahren ist.

Die Abstreifelemente 1138 können um eine in Figur 5 strichpunktiert angedeutete Schwenkachse in eine Abstreifstellung an die Abscheideplatte 1100 heran oder in eine Freigabestellung von dieser weggeklappt werden.

Unterhalb des Schienenpaares 1112 ist ein umlaufendes Endlosförderband 1140 angeordnet, welches ebenfalls in Längsrichtung der Lackierkabine 1002 verläuft und zu einem nicht eigens gezeigten Sammelbereich führt.

Die Abscheidevorrichtung 1048 der oben beschriebenen Lackierkabine 1002 funktioniert nun wie folgt:
Die mit Overspray beladene Kabinenluft wird hier durch den Umlenkbereich 1028 in Richtung auf die Abscheideeinheit 1046 der Abscheidevorrichtung 1048 - in Figur 5 also nach rechts - umgelenkt und strömt dort zwischen benachbarten Abscheideplatte 1100 hindurch, wobei Overspray ionisiert und an der Papierbahn 1078 auf den Abscheideplatten 1100 abgeschieden wird.

Gegebenenfalls von den Abscheideplatten 1100 nach unten abtropfender Overspray wird von über das untere Leitblech 1030 fließender Abscheideflüssigkeit aufgenommen und zum Sammelbehälter 38 geführt. Hierzu weist das untere Leitblech 1030 eine Verteilerrinne 1036c auf, über welche Abscheideflüssigkeit abgegeben wird.

Auch hier ist der Koronastrom ein Indikator für die Beladung der Abscheideflächen 1046, 1048 bzw. der Papierbahn 1078 mit Overspray.

Wenn die Isolationswirkung des abgeschiedenen Oversprays also zu groß ist und/oder ein einwandfreier Betrieb der Abscheideeinheit nicht mehr gewährleistet werden kann, werden die Papierbahnen 1078 mit nun daran haftendem Overspray von den Abscheideplatten 1100 entfernt und die Abscheideflächen 1102, 1104 der Abscheideplatten 1100 mit neuen, unverbrauchten Papierbahnen 1078 versehen.

Die kurzen Schienenprofile 1122a, 1122b werden dazu in eine Stellung gebracht, in welcher das kurze Schienenprofil 1122a mit der Führungsschiene 1108 der zu reinigenden Abscheideplatte 1100 fluchtet. Hierzu wird der Schlitten 1110 auf dem Schienenpaar 1112 in eine entsprechende Position gefahren.

Der Klemmschuh 1120 wird in der Führungsschiene 1118 nach vorne in Richtung auf die Abscheideplatte 1100 gefähren, wo er dieselbe ergreift. Die oben angesprochene Arretierung der Abscheideplatte 1100 in der Führungsschiene 1108 wird gelöst. Der Klemmschuh 1120 wird nun wieder zurück bewegt, wobei er nun die Abscheideplatte 1100 mit sich zieht.

Die Abscheideplatte 1100 wird in eine Stellung gefahren, in welcher sie mit jeweils zwei ihrer Laufrollen 1106 in jeweils einem kurzen Schienenprofil 1122a bzw. 1122b ruht. Diese Stellung der Abscheideplatte 1100 ist in Figur 5 mit gepunkteten Linien gezeigt.

Die Abstreifelemente 1138 der Abstreifeinrichtung 1136 werden mit der Teleskopeinrichtung 1134 nach oben gefahren und in ihre Abstreifstellung gebracht. Dann werden die Abstreifelemente 1138 nach unten gefahren. Hierdurch wird die an der Abscheideplatte 1100 haftende Papierbahn 1078 mit dem darauf abgeschiedenen Overspray von der Abscheideplatte 1100 abgestreift und fällt nach unten auf das Förderband 1140.

Wie oben erwähnt wird das mit dem Overspray von der Abscheideplatte 1100 herabgefallene Trennmittel von dem Förderband 1140 zu einem Sammelbereich gefördert. Von dort wird es einer Aufbereitung zugeführt. Die mit Overspray beladene Materialbahn wird gegebenenfalls einer weiteren Aufbereitung oder einer Entsorgung zugeführt, wie es an und für sich bekannt ist.

Wenn die Abstreifelemente 1138 ihre tiefste Position einnehmen, die in Figur 5 mit gestrichelten Linien dargestellt ist, ist die Abscheideplatte 1100 nun von der verbrauchten Papierbahn 1078 und daran haftendem Overspray befreit.

Nun werden die Abstreifelemente 1138 in ihre Freigabeposition gebracht. Der Hängeschlitten 1126 wird in Richtung auf die Führungsschiene 1118 verfahren, wobei die Laufschienen 1128 wie eine Art Gabelstapler-Gabel zwischen diese und die Abscheideplatte 1100 fahren, bis die Abscheideplatte 1100 sich in der Mitte zwischen den beiden Endpositionen der Wickelrolle 1080 befindet.

Nun wird, wie oben beschrieben, zwischen den Laufschienen 1128 eine mit Haftmittel 1086 getränkte Papierbahn 1078 aufgespannt, die mittels der Schneideinrichtung 1132 von der Wickelrolle 1080 abgeschnitten wird und dann zunächst nur auf den Haltestiften 1130 aufliegt. Diese werden nun eingezogen, so dass die Papierbahn 1078 nach unten auf die Abscheideplatte 1100 herabfällt und sich dabei zunächst lose auf die beiden Abscheideflächen 1102, 1104 derselben legt.

Die Papierbahn 1078 wird nun an die Abscheideflächen 1102, 1104 angedrückt, indem die Abstreifelemente 1138 nochmals von oben nach unten entlang der Abscheideflächen 1102, 1104 geführt werden, wobei der Anpressdruck gegenüber dem Abstreifvorgang vermindert ist.

Dann wird die nun mit einer neuen und unbeladenen Papierbahn 1078 versehene Abscheideplatte 1100 wieder in die ihr zugeordnete Führungsschiene 1108 der Abscheideeinheit 1046 eingefahren, indem der Klemmschuh 1120 in Richtung auf die Abscheideeinheit 1046 gefahren wird. Wenn die Abscheideplatte 1100 ihre Betriebsstellung ihrer Führungsschiene 1108 einnimmt, wird sie dort arretiert, worauf der Klemmschuh 1120 die Abscheideplatte 1100 freigibt.

Dieser gesamte Vorgang kann dann mit einer anderen Abscheideplatte 1100 wiederholt werden, welche von der Papierbahn 1078 mit darauf haftendem Overspray befreit werden muss.

## Patentansprüche

1. Verfahren zum Abscheiden von Overspray aus der mit Overspray beladenen Kabinenabluft von Beschichtungsanlagen, insbesondere von Lackieranlagen, bei welchem der Overspray von einem Luftstrom aufgenommen und zu einer elektrostatisch arbeitenden Abscheidevorrichtung (48; 1048) geführt wird, wo ein Großteil zumindest der Feststoffe aus dem Overspray an einem Abscheidebereich (54a; 1102, 1104) wenigstens einer Abscheidefläche (54; 1102, 1104) abgeschieden wird, wobei
eine zusammenhängende Materialbahn (78; 1078) als Trennmittel verwendet wird, welche zumindest teilweise entlang des Abscheidebereichs (54a; 1102, 1104) der wenigstens einen Abscheidefläche (54; 1102, 1104) angeordnet ist, **dadurch gekennzeichnet, dass** während des Betriebs der Abscheidevorrichtung (48; 1048) dafür gesorgt wird, dass die Materialbahn zumindest im Abscheidebereich (54a; 1102, 1104) der wenigstens einen Abscheidefläche (54; 1102, 1104) elektrisch leitfähig ist.

2. Verfahren nach Anspruch 1, **dadurch gekennzeichnet, dass** eine flexible Materialbahn (78; 1078) verwendet wird.

3. Verfahren nach Anspruch 1 oder 2, **dadurch gekennzeichnet, dass** eine Materialbahn (78; 1078) verwendet wird, die ein Cellulosematerial oder ein Kunststoffmaterial umfasst.

4. Verfahren nach einem der Ansprüche 1 bis 3, **dadurch gekennzeichnet, dass** die Materialbahn (78: 1078) mit einem Haftmittel (86; 1086) versehen wird, so dass sie wenigstens im Abscheidebereich (54a; 1102, 1104) an der wenigstens einen Abscheidefläche (54; 1102, 1104) haftet.

5. Verfahren nach Anspruch 4, **dadurch gekennzeichnet, dass** das Haftmittel (86; 1086) ein Lösemittel, insbesondere Wasser, umfasst.

6. Verfahren nach Anspruch 5, **dadurch gekennzeichnet, dass** das Haftmittel (86; 1086) eine Methylcellulose umfasst.

7. Verfahren nach einem der Ansprüche 4 bis 6, **dadurch gekennzeichnet, dass** ein elektrisch leitfähiges Haftmittel (86; 1086) verwendet wird.

8. Verfahren nach einem der Ansprüche 1 bis 7, **dadurch gekennzeichnet, dass** die Materialbahn (78; 1078) intermittierend oder kontinuierlich in Strömungsrichtung des Luftstroms oder entgegengesetzt zur Strömungsrichtung des Luftstroms über den Abscheidebereich (54a; 1102, 1104) der Abscheidefläche (54a; 1102, 1104) bewegt wird.

9. Verfahren nach Anspruch 8, **dadurch gekennzeichnet, dass** die Materialbahn (78; 1078) intermittierend oder kontinuierlich von einer Rolle (80; 1080) abgewickelt wird.

10. Verfahren nach einem der Ansprüche 1 bis 9, **dadurch gekennzeichnet, dass** die wenigstens eine Abscheidefläche (54) parallel zur Horizontalen verläuft.

11. Verfahren nach einem der Ansprüche 1 bis 9, **dadurch gekennzeichnet, dass** das die wenigstens eine Abscheidefläche (54; 1102, 1104) gegen die Horizontale geneigt ist.

12. Verfahren nach einem der Ansprüche 1 bis 11, **dadurch gekennzeichnet, dass** die wenigstens eine Abscheidefläche (54) durch ein dem Luftstrom zugewandtes Trum (54) eines endlos umlaufenden Bandes (52) bereitgestellt wird.

13. Verfahren nach einem der Ansprüche 1 bis 11, **dadurch gekennzeichnet, dass** die wenigstens eine Abscheidefläche (1102; 1104) durch eine Abscheideplatte (1100) bereitgestellt wird.

14. Verfahren nach einem der Ansprüche 1 bis 13, **dadurch gekennzeichnet, dass** mit Overspray beladene Materialbahnabschnitte einem Sammelbehälter (94) zugeführt werden.

15. Vorrichtung zum Abscheiden von Overspray aus der mit Overspray beladenen Kabinenabluft von Lackieranlagen mit
a) wenigstens einer Abscheidefläche (54; 1102, 1104), an welcher die Kabinenabluft entlang führbar ist und welche einen Abscheidebereich (54a; 1102, 1104) vorgibt und mit einem Pol einer Hochspannungsquelle (62; 1062) verbunden ist;
b) einer im Luftstrom angeordneten Elektrodeneinrichtung (60; 1060), welche der Abscheidefläche (54; 1102, 1104) zugeordnet und mit dem anderen Pol der Hochspannungsquelle (60; 1060) verbunden ist; wobei
c) eine zusammenhängende Materialbahn (78; 1078) als Trennmittel zumindest teilweise entlang des Abscheidebereichs (54a; 1102, 1104) der wenigstens einen Abscheidefläche (54; 1102, 1104) angeordnet ist, **dadurch gekennzeichnet, dass** die Materialbahn (78; 1078) während des Betriebs der Abscheidevorrichtung (48; 1048) zumindest im Abscheidebereich (54a; 1102, 1104) der wenigstens einen Abscheidefläche (54; 1102, 1104) elektrisch leitfähig gehalten ist.

16. Vorrichtung nach Anspruch 15, **dadurch gekennzeichnet, dass** die Materialbahn (78; 1078) flexibel ist.

17. Vorrichtung nach Anspruch 15 oder 16, **dadurch gekennzeichnet, dass** die Materialbahn (78; 1078) aus einem Cellulosematerial oder einem Kunststoffmaterial ist.

18. Vorrichtung nach einem der Ansprüche 15 bis 17, **dadurch gekennzeichnet, dass** die Materialbahn (78; 1078) mittels einer Beschichtungseinrichtung (84; 1084) mit einem Haftmittel (86; 1086) versehen werden kann, so dass die Materialbahn (78; 1078) an der wenigstens einen Abscheidefläche (54; 1102, 1104) haftet.

19. Vorrichtung nach Anspruch 18, **dadurch gekennzeichnet, dass** das Haftmittel (86; 1086) ein Lösemittel, insbesondere Wasser, umfasst.

20. Vorrichtung nach Anspruch 19, **dadurch gekennzeichnet, dass** das Haftmittel (86; 1086) eine Methylcellulose umfasst.

21. Vorrichtung nach einem der Ansprüche 18 bis 20, **dadurch gekennzeichnet, dass** das Haftmittel (86; 1086) elektrisch leitfähig ist.

22. Vorrichtung nach einem der Ansprüche 15 bis 21, **dadurch gekennzeichnet, dass** die Materialbahn (78; 1078) mittels einer Zuführeinrichtung (82, 52; 1126) intermittierend oder kontinuierlich in Strömungsrichtung des Luftstroms oder entgegengesetzt zur Strömungsrichtung des Luftstroms über den Abscheidebereich (54a; 1102, 1104) der Abscheidefläche (54; 1102, 1104) bewegbar ist.

23. Vorrichtung nach Anspruch 21, **dadurch gekennzeichnet, dass** die Materialbahn (78; 1078) mittels der Zuführeinrichtung (82, 52; 1126) intermittierend oder kontinuierlich von einer Rolle (80; 1080) abwickelbar ist.

24. Vorrichtung nach einem der Ansprüche 15 bis 23, **dadurch gekennzeichnet, dass** die wenigstens eine Abscheidefläche (54) parallel zur Horizontalen verläuft.

25. Vorrichtung nach einem der Ansprüche 15 bis 23, **dadurch gekennzeichnet, dass** die wenigstens eine Abscheidefläche (54; 1102, 1104) gegen die Horizontale geneigt ist.

26. Vorrichtung nach einem der Ansprüche 15 bis 25, **dadurch gekennzeichnet, dass** die wenigstens eine Abscheidefläche (54) durch ein dem Luftstrom zugewandtes Trum (54) eines endlos umlaufenden Bandes (52) ausgebildet ist.

27. Vorrichtung nach einem der Ansprüche 15 bis 26, **dadurch gekennzeichnet, dass** die wenigstens eine Abscheidefläche (1102, 1104) die Außenfläche einer Abscheideplatte (1100) ist.

28. Anlage zum Beschichten, insbesondere zum Lackieren von Gegenständen, insbesondere von Fahrzeugkarosserien, mit
a) einer Beschichtungskabine (2; 1002), in welcher die Gegenstände (4; 1004) mit Beschichtungsmaterial beaufschlagbar sind und durch welche ein Luftstrom geleitet werden kann, der entstehende Overspraypartikel des Beschichtungsmaterials aufnimmt und abführt;
b) einer elektrostatisch arbeitenden Abscheidevorrichtung (48; 1048),
**dadurch gekennzeichnet, dass**
c) die elektrostatische Abscheidevorrichtung (48; 1048) nach einem der Ansprüche 15 bis 27 ausgebildet ist.

## Claims

1. A method for separating overspray from the overspray-laden booth exhaust air of coating systems, particularly paint systems, in which the overspray is taken up by an air stream and conveyed to an electrostatically operating separating device (48; 1048) where the bulk at least of the solids is separated from the overspray at a separating region (54a; 1102, 1104) of at least one separating surface (54; 1102, 1104), wherein a cohesive material web (78; 1078) is used as a separating agent, which is arranged at least partially along the separating region (54a; 1102, 1104) of the at least one separating surface (54; 1102, 1104),
**characterised in that**
during operation of the separating device (48; 1048), it is ensured that the material web is electrically conductive at least in the separating region (54a; 1102, 1104) of the at least one separating surface (54; 1102, 1104).

2. A method according to Claim 1, **characterised in that** a flexible material web (78; 1078) is used.

3. A method according to Claim 1 or 2, **characterised in that** a material web (78; 1078) is used, which comprises a cellulose material or a plastics material.

4. A method according to one of Claims 1 to 3, **characterised in that** the material web (78; 1078) is provided with an adhesive agent (86; 1086) so that it adheres to the at least one separating surface (54; 1102, 1104) at least in the separating region (54a; 1102, 1104).

5. A method according to Claim 4, **characterised in that** the adhesive agent (86; 1086) comprises a solvent, particularly water.

6. A method according to Claim 5, **characterised in that** the adhesive agent (86; 1086) comprises a methyl cellulose.

7. A method according to one of Claims 4 to 6, **characterised in that** an electrically conductive adhesive agent (86; 1086) is used.

8. A method according to one of Claims 1 to 7, **characterised in that** the material web (78; 1078) is moved intermittently or continuously over the separating region (54a; 1102, 1104) of the separating surface (54a; 1102, 1104) in the flow direction of the air stream or against the flow direction of the air stream.

9. A method according to Claim 8, **characterised in that** the material web (78; 1078) is unwound intermittently or continuously from a roll (80; 1080).

10. A method according to one of Claims 1 to 9, **characterised in that** the at least one separating surface (54) extends parallel to the horizontal.

11. A method according to one of Claims 1 to 9, **characterised in that** the at least one separating surface (54; 1102, 1104) is inclined to the horizontal.

12. A method according to one of Claims 1 to 11, **characterised in that** the at least one separating surface (54) is supplied by a strand (54) of a continuously revolving belt (52), which strand faces the air stream.

13. A method according to one of Claims 1 to 11, **characterised in that** the at least one separating surface (1102; 1104) is provided by a separating plate (1100).

14. A method according to one of Claims 1 to 13, **characterised in that** overspray-laden material web portions are supplied to a collecting tank (94).

15. A device for separating overspray from the overspray-laden booth exhaust air of paint systems having
a) at least one separating surface (54; 1102, 1104) along which the booth exhaust air can be conveyed and which provides a separating region (54a; 1102, 1104) and is connected to a terminal of a high voltage source (62; 1062);
b) an electrode device (60; 1060) which is arranged in the air stream, is associated with the separating surface (54; 1102, 1104) and is connected to the other terminal of the high voltage source (60; 1060), wherein
c) a cohesive material web (78; 1078) is arranged as a separating agent at least partially along the separating region (54a; 1102, 1104) of at least one separating surface (54; 1102, 1104), cha
racterised in that
the material web (78; 1078) is kept electrically conductive at least in the separating region (54a; 1102, 1104) of the at least one separating surface (54; 1102, 1104) during operation of the separating device (48; 1048).

16. A device according to Claim 15, **characterised in that** the material web (78; 1078) is flexible.

17. A device according to Claim 15 or 16, **characterised in that** the material web (78; 1078) is made from a cellulose material or a plastics material.

18. A device according to one of Claims 15 to 17, **characterised in that** the material web (78; 1078) can be provided with an adhesive agent (86; 1086) by means of a coating device (84; 1084) so that the material web (78; 1078) adheres to the at least one separating surface (54; 1102, 1104).

19. A device according to Claim 18, **characterised in that** the adhesive agent (86; 1086) comprises a solvent, particularly water.

20. A device according to Claim 19, **characterised in that** the adhesive agent (86; 1086) comprises a methyl cellulose.

21. A device according to one of Claims 18 to 20, **characterised in that** the adhesive agent (86; 1086) is electrically conductive.

22. A device according to one of Claims 15 to 21, **characterised in that** the material web (78; 1078) can be moved intermittently or continuously in the flow direction of the air stream or against the flow direction of the air stream over the separating region (54a; 1102, 1104) of the separating surface (54a; 1102, 1104) by means of a supply device.

23. A device according to Claim 21, **characterised in that** the material web (78; 1078) can be unwound intermittently or continuously from a roll (80; 1080) by means of the supply device (82; 52; 1126).

24. A device according to one of Claims 15 to 23, **characterised in that** the at least one separating surface (54) extends parallel to the horizontal.

25. A device according to one of Claims 15 to 23, **characterised in that** the at least one separating surface (54; 1102, 1104) is inclined to the horizontal.

26. A device according to one of Claims 15 to 25, **characterised in that** the at least one separating surface (54) is provided by a strand (54) of a continuously revolving belt (52), which strand faces the air stream.

27. A device according to one of Claims 15 to 26, **characterised in that** the at least one separating surface (1102; 1104) is the outer surface of a separating plate (1100).

28. A system for coating, particularly painting, objects, particularly vehicle bodies, having
a) a coating booth (2; 1002) in which the objects (4; 1004) can be acted upon by coating material and through which an air stream can be conducted which takes up and removes the resultant overspray particles of the coating material;
b) an electrostatically operating separating device (48; 1048),
**characterised in that**
c) the electrostatic separating device (48; 1048) is constructed according to one of Claims 15 to 27.

## Revendications

1. Procédé pour séparer l'excès de projection de l'air de cabine chargé d'excès de projection qui est évacué des installations de revêtement, en particulier des installations de peinture, dans lequel l'excès de projection est pris en charge par un courant d'air et conduit à un dispositif de séparation (48 ; 1048) fonctionnant de manière électrostatique, où une grande partie au moins des matières solides sont séparées de l'excès de projection à une zone de séparation (54a ; 1102, 1104) d'au moins une surface de séparation (54 ; 1102, 1104), dans lequel une bande de matière continue (78 ; 1078) est utilisée comme moyen de séparation, laquelle est disposée au moins en partie le long de la zone de séparation (54a ; 1102, 1104) de ladite au moins une surface de séparation (54 ; 1102, 1104),
**caractérisé en ce que**
pendant le fonctionnement du dispositif de séparation (48 ; 1048), il est fait en sorte que la bande de matière soit électriquement conductrice au moins dans la zone de séparation (54a; 1102, 1104) de ladite au moins une surface de séparation (54 ; 1102, 1104).

2. Procédé selon la revendication 1, **caractérisé en ce que** l'on utilise une bande de matière flexible (78 ; 1078).

3. Procédé selon la revendication 1 ou 2, **caractérisé en ce que** l'on utilise une bande de matière (78 ; 1078) qui comprend une matière cellulosique ou une matière plastique.

4. Procédé selon l'une des revendication 1 à 3, **caractérisé en ce que** la bande de matière (78 ; 1078) est munie d'un agent adhésif (86 ; 1086), de façon qu'elle adhère au moins dans la zone de séparation (54a ; 1102, 1104) de ladite au moins une surface de séparation (54 ; 1102, 1104).

5. Procédé selon la revendication 4, **caractérisé en ce que** l'agent adhésif (86 ; 1086) comprend un solvant, en particulier de l'eau.

6. Procédé selon la revendication 5, **caractérisé en ce que** l'agent adhésif (86 ; 1086) comprend une méthylcellulose.

7. Procédé selon l'une des revendications 4 à 6, **caractérisé en ce que** l'on utilise un agent adhésif (86 ; 1086) électriquement conducteur.

8. Procédé selon l'une des revendications 1 à 7, **caractérisé en ce que** la bande de matière (78 ; 1078) est déplacée de façon intermittente ou continue dans la direction d'écoulement du courant d'air ou à l'inverse de la direction d'écoulement du courant d'air sur la zone de séparation (54a; 1102, 1104) de la surface de séparation (54a ; 1102, 1104).

9. Procédé selon la revendication 8, **caractérisé en ce que** la bande de matière (78 ; 1078) est déroulée de façon intermittente ou continue d'un rouleau (80 ; 1080).

10. Procédé selon l'une des revendications 1 à 9, **caractérisé en ce que** ladite au moins une surface de séparation (54) s'étend parallèlement à l'horizontale.

11. Procédé selon l'une des revendications 1 à 9, **caractérisé en ce que** ladite au moins une surface de séparation (54 ; 1102, 1104) est inclinée par rapport à l'horizontale.

12. Procédé selon l'une des revendications 1 à 11, **caractérisé en ce que** ladite au moins une surface de séparation (54) est mise à disposition par un brin (54) tourné vers le courant d'air d'une bande (52) circulant sans fin.

13. Procédé selon l'une des revendications 1 à 11, **caractérisé en ce que** ladite au moins une surface de séparation (1102 ; 1104) est mise à disposition par une plaque de séparation (1100).

14. Procédé selon l'une des revendications 1 à 13, **caractérisé en ce que** les sections de bande de matière chargées d'excès de projection sont amenées à un récipient collecteur (94).

15. Dispositif pour séparer l'excès de projection de l'air de cabine chargé d'excès de projection qui est évacué des installations de peinture, comprenant
a) au moins une surface de séparation (54 ; 1102, 1104) le long de laquelle l'air évacué de la cabine peut être guidé et laquelle définit une zone de séparation (54a ; 1102, 1104) et est reliée à un pôle d'une source de haute tension (62 ; 1062) ;
b) un dispositif à électrodes (60 ; 1060) disposé dans le courant d'air, lequel est associé à la surface de séparation (54 ; 1102, 1104) et relié à l'autre pôle de la source de haute tension (60 ; 1060) ; dans lequel
c) une bande de matière continue (78 ; 1078) est disposée en tant que moyen de séparation au moins en partie le long de la zone de séparation (54a; 1102, 1104) de ladite au moins une surface de séparation (54 ; 1102, 1104),
**caractérisé en ce que**
pendant le fonctionnement du dispositif de séparation (48 ; 1048), la bande de matière (78 ; 1078) est maintenue électriquement conductrice au moins dans la zone de séparation (54a ; 1102, 1104) de ladite au moins une surface de séparation (54 ; 1102, 1104).

16. Dispositif selon la revendication 15, **caractérisé en ce que** la bande de matière (78 ; 1078) est flexible.

17. Dispositif selon la revendication 15 ou 16, **caractérisé en ce que** la bande de matière (78 ; 1078) est réalisée dans une matière cellulosique ou une matière plastique.

18. Dispositif selon l'une des revendications 15 à 17, **caractérisé en ce que** la bande de matière (78 ; 1078) peut être munie d'un agent adhésif (86 ; 1086) au moyen d'un dispositif de revêtement (84 ; 1084), de façon que la bande de matière (78 ; 1078) adhère à ladite au moins une surface de séparation (54 ; 1102, 1104).

19. Dispositif selon la revendication 18, **caractérisé en ce que** l'agent adhésif (86 ; 1086) comprend un solvant, en particulier de l'eau.

20. Dispositif selon la revendication 19, **caractérisé en ce que** l'agent adhésif (86 ; 1086) comprend une méthylcellulose.

21. Dispositif selon l'une des revendications 18 à 20, **caractérisé en ce que** l'agent adhésif (86 ; 1086) est électriquement conducteur.

22. Dispositif selon l'une des revendications 15 à 21, **caractérisé en ce que** la bande de matière (78 ; 1078) peut être déplacée de façon intermittente ou continue dans la direction d'écoulement du courant d'air ou à l'inverse de la direction d'écoulement du courant d'air sur la zone de séparation (54a ; 1102, 1104) de la surface de séparation (54 ; 1102, 1104) au moyen d'un dispositif d'amenée (82, 52 ; 1126).

23. Dispositif selon la revendication 21, **caractérisé en ce que** la bande de matière (78 ; 1078) peut être déroulée de façon intermittente ou continue d'un rouleau (80 ; 1080) au moyen du dispositif d'amenée (82, 52 ; 1126).

24. Dispositif selon l'une des revendications 15 à 23, **caractérisé en ce que** ladite au moins une surface de séparation (54) s'étend parallèlement à l'horizontale.

25. Dispositif selon l'une des revendications 15 à 23, **caractérisé en ce que** ladite au moins une surface de séparation (54 ; 1102, 1104) est inclinée par rapport à l'horizontale.

26. Dispositif selon l'une des revendications 15 à 25, **caractérisé en ce que** ladite au moins une surface de séparation (54) est formée par un brin (54) tourné vers le courant d'air d'une bande (52) circulant sans fin.

27. Dispositif selon l'une des revendications 15 à 26, **caractérisé en ce que** ladite au moins une surface de séparation (1102, 1104) est la surface extérieure d'une plaque de séparation (1100).

28. Installation de revêtement, en particulier de peinture d'objets, en particulier de carrosseries de véhicules, comprenant
a) une cabine de revêtement (2 ; 1002) dans laquelle les objets (4 ; 1004) peuvent être exposés à une matière de revêtement et à travers laquelle un courant d'air peut être conduit, lequel prend en charge et évacue les particules d'excès de projection de la matière de revêtement qui sont produites ;
b) un dispositif de séparation (48 ; 1048) fonctionnant de manière électrostatique, **caractérisé en ce que**
c) le dispositif de séparation électrostatique (48 ; 1048) est réalisé selon l'une des revendications 15 à 27.
